# EUROPEAN PATENT APPLICATION

(11) **EP 4 742 125 A1**
(43) Date of publication of application: **13.05.2026**
(21) Application number: 24835746.9
(22) Date of filing: 06.03.2024
(51) Int. Cl.: G06Q 10/0631, G06Q 10/20

(54) **ORGANIZATION DESIGN ASSISTANCE DEVICE, ORGANIZATION DESIGN ASSISTANCE METHOD, AND ORGANIZATION DESIGN ASSISTANCE PROGRAM**

(30) Priority: 04.07.2023 JP 2023110101
(71) Applicant: Hitachi, Ltd., Tokyo 100-8280 (JP)
(72) Inventor: WATANABE, Junya, Tokyo 100-8280 (JP); KONO, Toshiaki, Tokyo 100-8280 (JP); HIRUTA, Tomoaki, Tokyo 100-8280 (JP)
(74) Representative: MERH-IP Matias Erny Reichl Hoffmann Patentanwälte PartG mbB
(86) International application number: PCT/JP2024/008501
(87) International publication number: WO 2025/009224

(57) **Abstract**

An organization design support device (100) includes: an input unit (14) that receives, as various types of input information, facility information (11) indicating a facility that is a target of work, maintenance task information (12) indicating a work content for the facility, and maintenance organization information (13) indicating an organization to which a person executing the work content belongs; a work amount calculation unit (15) that calculates a work amount for each work content based on the various types of input information received by the input unit (14); a classification unit (16) that aggregates the work amounts calculated by the work amount calculation unit (15) for each organization of the maintenance organization information (13); and a display unit (18) that displays a work amount that is a result of the aggregation performed by the classification unit (16).

## Description

### Technical Field

The present invention relates to an organization design support device, an organization design support method, and an organization design support program.

### Background Art

In recent years, business environments have been changing rapidly, and various industries have been required to review and improve their work designs (work plans) in accordance with their business environments. For example, in maintenance work for infrastructure, railway, industrial equipment, medical equipment, and the like, it is necessary to continuously execute maintenance such as inspection, repair, and replacement in order to safely and stably manage assets (electric power facilities and the like). In particular, in the electric power industry, safe and stable supply of electric power at a high availability rate is strongly required as diversification of assets, such as new installations and renewals of facilities with the increase of aging and long-operating facilities and the increase of renewable energy, is progressing.

In order to cope with the diversification of assets and realize stable facility management at a high availability rate, it is important to execute maintenance work with appropriate priority according to the operation status and management characteristics of the assets and to prevent occurrences of failures in advance.

PTL 1 describes a method for supporting execution of such maintenance work. PTL 1 discloses the following for maintenance of a water treatment device.

A facility maintenance support device comprising: "a facility priority calculation unit that calculates priorities of water treatment facilities in executing maintenance work between a plurality of sites where the water treatment facilities are installed, based on a site evaluation database that stores, as site evaluation data, priorities of the plurality of sites in executing maintenance work for the sites, a facility evaluation database that stores, as facility evaluation data, data on importance levels and soundness levels of the water treatment facilities installed in the respective sites, an equipment evaluation database that stores, as equipment evaluation data, data on importance levels and soundness levels of equipment installed in the respective water treatment facilities, and the site evaluation data stored in the site evaluation database and the facility evaluation data stored in the facility evaluation database; a facility selection unit that selects a water treatment facility for which the maintenance work is to be executed according to the priorities calculated by the facility priority calculation unit; an equipment selection unit that reads, from the equipment evaluation database, equipment evaluation data for equipment installed in the water treatment facility selected by the facility selection unit, and selects equipment for which the maintenance work is to be executed based on the read equipment evaluation data; and a determination unit that determines and outputs a priority order for executing the maintenance work on the equipment selected by the equipment selection unit".

### Citation List

### Patent Literature

PTL 1: JP 2012-208930 A

### Summary of Invention

### Technical Problem

In designing (planning) work such as maintenance work, it is also important to consider the viewpoint of organization design, that is, how to construct an organization to which maintenance workers executing work belong in each area. For a maintenance task to inspect an asset belonging to a certain area, a maintenance worker is assigned from an organization in charge of the area. Therefore, it is considered to support, by a computer, an organization design in which an organization is designed in advance according to the work amount of the maintenance work for each area. That is, the organization design is to determine in advance how many personnel should be prepared in which base (area) in advance.

First, while business environments such as societies, environments, customers, and technologies rapidly change, it is a key to a company's sustainable development to accurately grasp daily situation changes and continue flexible business transformation. In particular, in the electric power field, diversification of assets, such as the increase of long-operating facilities and the expansion of introduction of renewable energy facilities, is progressing. In addition, with the development of sensors, communication technology, and data analysis technology, the introduction of new IoT technology such as predictive diagnosis is also progressing. Along with such changes in assets and technologies, it is also necessary to change the methods of maintenance tasks, and the maintenance tasks are becoming more diverse.

On the other hand, there is a growing shortage of human resources for maintenance workers who execute maintenance tasks, and it is necessary to perform various maintenance tasks with limited personnel. When a necessary maintenance task cannot be executed due to a shortage of personnel, a long-term facility shutdown occurs due to an unexpected failure, and a facility management company incurs a large loss cost. In addition, tasks that maintenance workers can handle vary depending on their skills and coverages of responsibility. Unless an organization capable of supplying maintenance workers who can handle the maintenance tasks that occur is constructed in advance, problems will arise, such as maintenance work not being executed at an appropriate timing or work being concentrated on specific maintenance worker.

However, PTL 1 merely describes that the number of persons who can be procured for repair or recovery for each work type is extracted from the maintenance company database, and does not describe any specific organization design as to from which organization in which area the "procurable maintenance worker" is procured.

In a case where the number of maintenance tasks is excessively small with a small number of maintenance workers, the number of failures increases, the failure shutdown time increases, and the availability rate decreases. On the other hand, in a case where the number of maintenance tasks is excessively large with a large number of maintenance workers, the shutdown period for maintenance becomes long, and the availability rate decreases.

Therefore, a main object of the present invention is to support the design of an appropriate organization structure in a well-balanced manner corresponding to a work amount for each facility.

### Solution to Problem

In order to solve the aforementioned problems, an organization design support device according to the present invention has the following features.

The organization design support device according to the present invention includes:
an input unit that receives, as various types of input information, facility information indicating a facility that is a target of work, task information indicating a work content for the facility, and organization information indicating an organization to which a person executing the work content belongs;
a work amount calculation unit that calculates a work amount for each work content based on the various types of input information received by the input unit;
an aggregation unit that aggregates the work amounts calculated by the work amount calculation unit for each organization of the organization information; and
a display unit that displays a work amount that is a result of the aggregation performed by the aggregation unit.

Other solutions will be described later.

### Advantageous Effects of Invention

According to the present invention, it is possible to support the design of an appropriate organization structure in a well-balanced manner corresponding to a work amount for each facility.

### Brief Description of Drawings

[FIG. 1] FIG. 1 is a configuration diagram of an organization design support device according to a first embodiment.
[FIG. 2] FIG. 2 is a table illustrating representative categories of various types of input information on maintenance work and main design contents for the respective categories according to the first embodiment.
[FIG. 3] FIG. 3 is a hardware configuration diagram of the organization design support device according to the first embodiment.
[FIG. 4] FIG. 4 is a table illustrating an example of facility information according to the first embodiment.
[FIG. 5] FIG. 5 is an equipment configuration diagram of a substation illustrating the facility information of FIG. 4 according to the first embodiment.
[FIG. 6] FIG. 6 is a table illustrating an example of maintenance task information according to the first embodiment.
[FIG. 7] FIG. 7 is a table illustrating an example of maintenance organization information according to the first embodiment.
[FIG. 8] FIG. 8 is a table illustrating an example of task assignment information according to the first embodiment.
[FIG. 9] FIG. 9 is a Gantt chart illustrating a calculation result of a work amount calculation unit according to the first embodiment.
[FIG. 10] FIG. 10 is a screen display diagram of a result of a task type classification unit classifying work times by task type, sorting work times by area, and comparing work times using bar graphs according to the first embodiment.
[FIG. 11] FIG. 11 is a screen display diagram of a result of a maintenance organization classification unit comparing work times by maintenance worker and by base using bar graphs according to the first embodiment.
[FIG. 12] FIG. 12 is a screen display diagram of a result of the task type classification unit displaying work amounts by task type using future time-series graphs according to the first embodiment.
[FIG. 13] FIG. 13 is a screen display diagram of a result of the maintenance organization classification unit plotting generated work amounts on the vertical axis and work capacities on the horizontal axis by base according to the first embodiment.
[FIG. 14] FIG. 14 is a configuration diagram of an organization design support device according to a second embodiment.
[FIG. 15] FIG. 15 is a screen display diagram of a result of a task design pattern classification unit comparing work times by area for each of task design patterns having different execution triggers using bar graphs according to the second embodiment.
[FIG. 16] FIG. 16 is a screen display diagram of a result of an organization design pattern classification unit comparing the waiting times (work capacities) by area for each of organization design patterns having different organization structures using bar graphs according to the second embodiment.

### Description of Embodiments

Hereinafter, a first embodiment and a second embodiment of the present invention will be described with reference to the drawings.

### [First Embodiment]

Hereinafter, the first embodiment will be described.

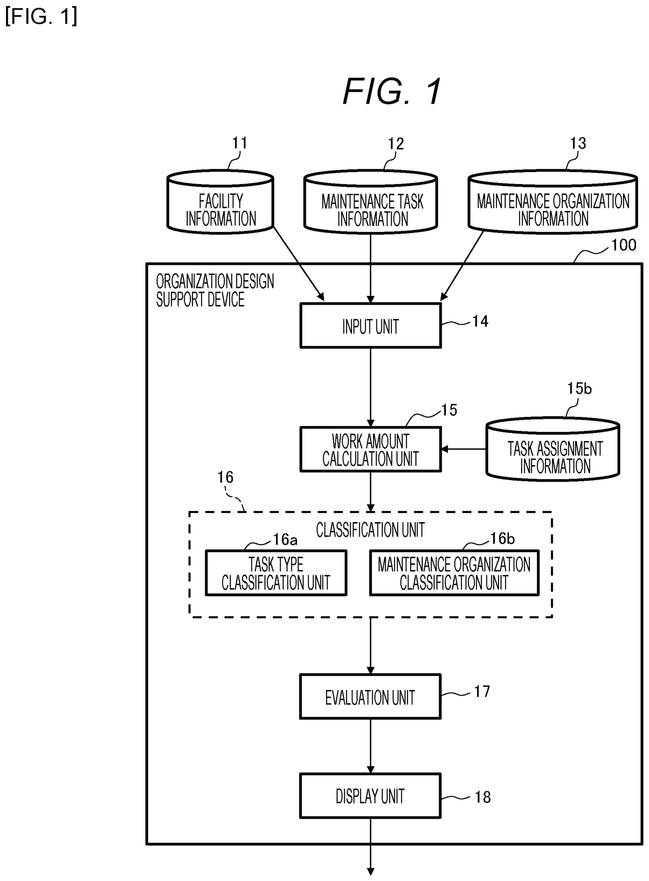

FIG. 1 is a configuration diagram of an organization design support device 100 according to the first embodiment.

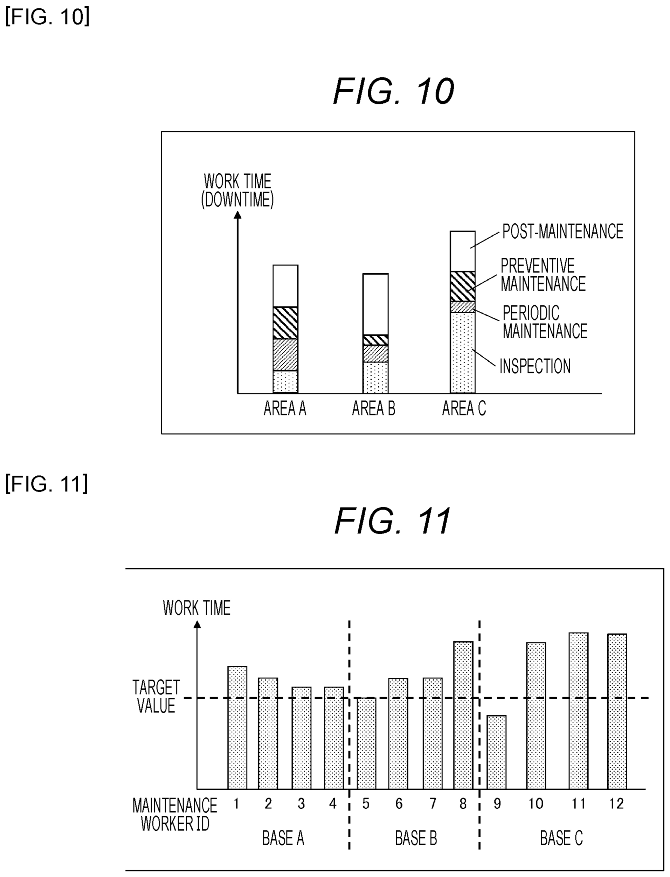

The organization design support device 100 includes an input unit 14, a work amount calculation unit 15, a classification unit 16 (a task type classification unit 16a to be described with reference to FIG. 10 and a maintenance organization classification unit 16b to be described with reference to FIG. 11), an evaluation unit 17, and a display unit 18.

The input unit 14 receives, as various types of input information, facility information 11 indicating a facility that is a target of work, maintenance task information 12 indicating a work content for the facility, and maintenance organization information 13 indicating an organization to which a person who executes the work content belongs. Hereinafter, an example in which the input unit 14 receives various types of input information related to the design of the maintenance work will be described. Note that the maintenance work may include not only work directly related to facility maintenance such as inspection, repair, maintenance, replacement, installation, and disposal but also indirect work such as meetings, records, sales, and office work. In addition, assets to be subjected to maintenance work include various items such as facilities, equipment, machines, and products.

The work amount calculation unit 15 calculates a work amount by work content based on the various types of input information received by the input unit 14. The classification unit 16 classifies the work amounts calculated by the work amount calculation unit 15 by organization in the maintenance organization information 13 (further by organization and by task type of work content).

The evaluation unit 17 aggregates classification results of the classification unit 16 by organization in the maintenance organization information 13 (further by organization and by task type of work content). The display unit 18 displays a work amount, which is an aggregation result.

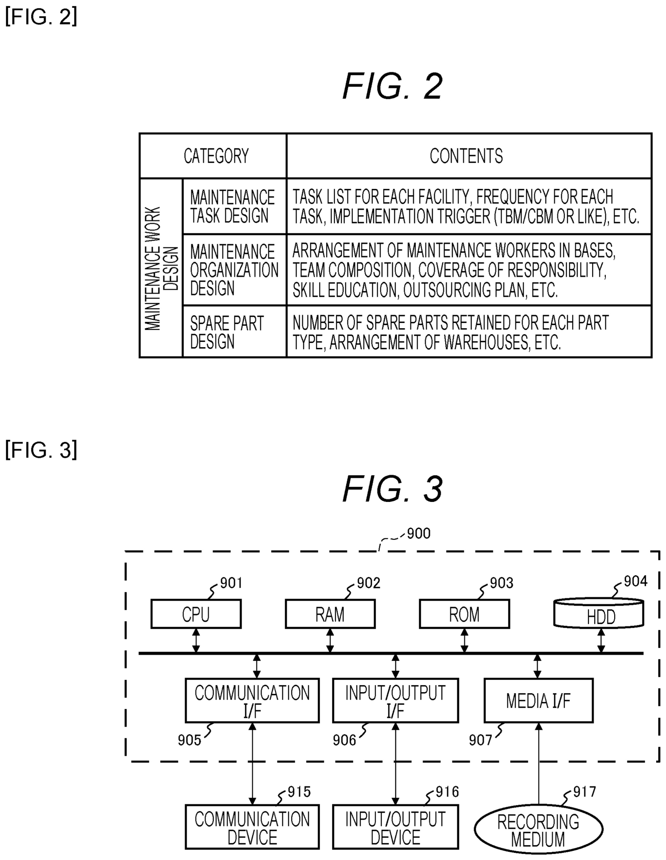

FIG. 2 is a table illustrating representative categories of various types of input information on maintenance work and main design contents for the respective categories. The various types of input information on maintenance work include the following information.
· As the maintenance task information 12, there is a maintenance task design in which a maintenance task list to be executed for each facility, an implementation frequency for each task, an execution trigger, etc. are designed.
· As the maintenance organization information 13, there is a maintenance organization design in which arrangement of maintenance workers or team composition, a coverage of responsibility, a skill plan, an outsourcing plan, etc. are designed.
· As the facility information 11, there is a spare part design in which the number of spare parts retained for each part type of a target facility, arrangement of storage warehouses, etc. are designed.

FIG. 3 is a hardware configuration diagram of the organization design support device 100.

The organization design support device 100 is configured as a computer 900 including a CPU 901, a RAM 902, a ROM 903, an HDD 904, a communication I/F 905, an input/output I/F 906, and a media I/F 907.

The communication I/F 905 is connected to an external communication device 915. The input/output I/F 906 is connected to an input/output device 916. The media I/F 907 reads and writes data from and to a recording medium 917. Further, the CPU 901 executes a program (also referred to as an application or an app for short) read into the RAM 902 to improve and control each processing unit. Then, the program can be distributed via a communication line or recorded in the recording medium 917 such as a CD-ROM for distribution.

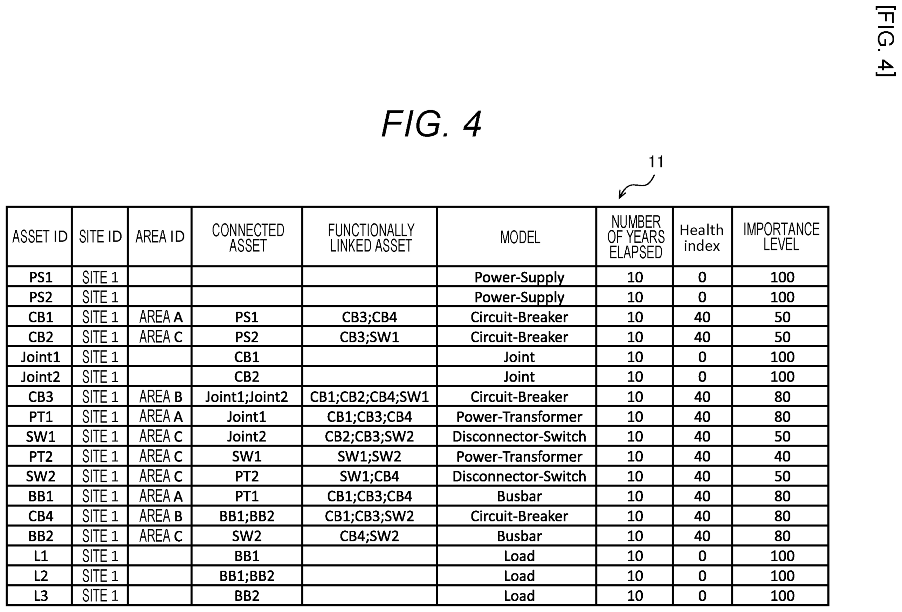

FIG. 4 is a table illustrating an example of the facility information 11. In the facility information 11, the following information is associated with an ID of each asset (electric power facility).
· An ID indicating a place where the asset is installed (site ID and installation area ID).
· An ID of an asset connected to the asset (connected asset).
· An ID of an asset functionally linked with the asset (functionally linked asset). Note that the connected asset is an asset that is physically and directly connected, and the functionally linked asset is an asset functionally linked in a set of multiple assets (for example, assets that simultaneously cause a power outage).
· A model of the asset (asset type).
The number of years elapsed from the start of use of the asset.
· A health index which is an index of equipment health of the asset. In FIG. 4, the health index "0" indicates the most healthy state (state with no failure or deterioration), and the health index "100" indicates the least healthy state (state with failure).
· An importance level of the asset. For example, a main asset that supplies electric power to a large number of assets or controls a large number of assets has a higher importance level.

In addition, the facility information 11 is embodied in the table of FIG. 4 as follows.
· The electric power network configuration of the facility information 11 is embodied by the site ID, the asset ID, the connected asset, and the functionally linked asset of FIG. 4.
· The equipment configuration of the facility information 11 is embodied by the asset ID and the model of FIG. 4. Although not illustrated in this example, information such as parts constituting each model is also included in the equipment configuration.
· The operation information of the facility information 11 is embodied by the number of years elapsed and the health index of FIG. 4.
· The reliability information of the facility information 11 is embodied by the model, the health index, and the importance level of FIG. 4. In general, a failure rate or the like is calculated from these types of information.
· The power outage area during inspection (power outage area during maintenance) of the facility information 11 is embodied by the area ID of FIG. 4. The power outage here is not an accidental power outage caused by a disaster, but is an artificially planned power outage for causing a maintenance worker to perform maintenance work such as inspection. The facility information 11 to be received by the input unit 14 includes information on which facility belongs to which area as information on areas where a power outage occurs simultaneously during inspection work on a facility that is a target of work.

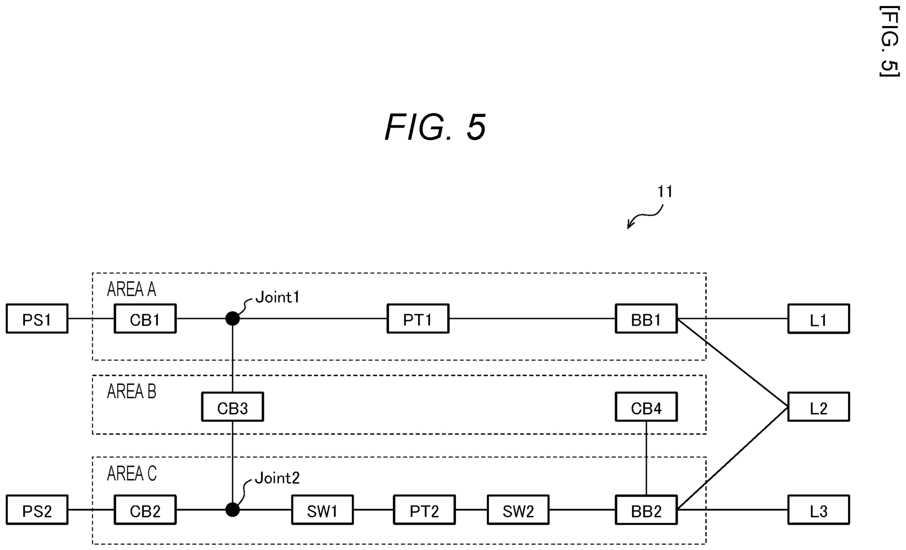

FIG. 5 is an equipment configuration diagram of a substation illustrating the facility information 11 of FIG. 4.

In FIG. 5, an individual asset is illustrated for each asset ID (PS1 or the like) of FIG. 4, and a connection line between assets via a power supply line reflects a connection relationship based on the connected asset of FIG. 4. In a substation, electrical power is supplied from two sources (PS1, PS2) and sent to three loads (L1 to L3) through several substation facilities, such as circuit breakers (CB1 to CB4), transformers (PT1, PT2), switches (SW1, SW2), and bus bars (BB1, BB2).

In addition, in the substation, if a certain asset is shut down due to a failure or for maintenance, the maintenance worker performs a special operation called "switching" for isolating the asset to be maintained by opening nearby circuit breakers or switches that operate in conjunction with each other. The information on assets to be functionally linked when each asset is shut down is defined in the functionally linked asset field of FIG. 4. For example, when the asset PT1 is shut down, the maintenance worker operates CB1, CB3, and CB4 to the open state in conjunction with each other. By performing such a "switching" operation, the substation is managed so as to minimize the influence range of the shut-down asset and not to reduce the power supply to the loads as much as possible.

In the example of FIG. 5, area A to area C are distinguished, reflecting the area IDs of FIG. 4. The maintenance worker shuts down an asset and executes maintenance work in a set period for each area. When an asset in an area is shut down for maintenance, the maintenance worker may also inspect other assets in the same area. In addition, the importance level field of FIG. 4 is defined by, for example, the magnitude of the influence range when the asset is shut down.

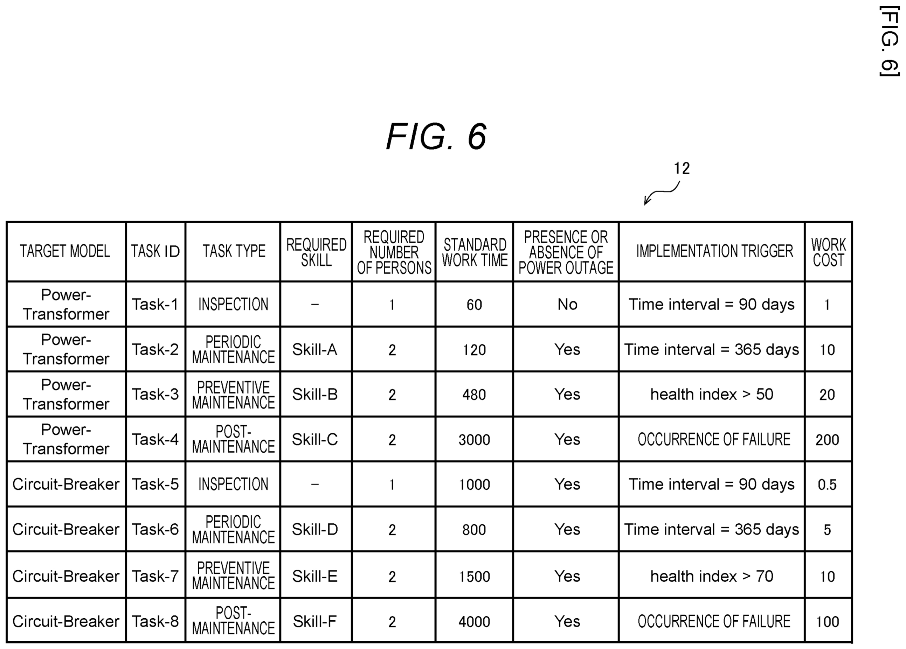

FIG. 6 is a table illustrating an example of the maintenance task information 12. In the maintenance task information 12, the following information is associated with each asset model that is a target of maintenance (target model) . Here, transformers (Task-1 to Task-4) and circuit breakers (Task-5 to Task-8) are taken as examples.
· Content of Maintenance Task (Task ID and task type)
· Information on Resources for Executing Maintenance Task (Required skill of maintenance worker, required number of persons, and standard work time)
· Information When Maintenance Task Is Executed (Presence or absence of power outage during work, work execution trigger, and work cost)

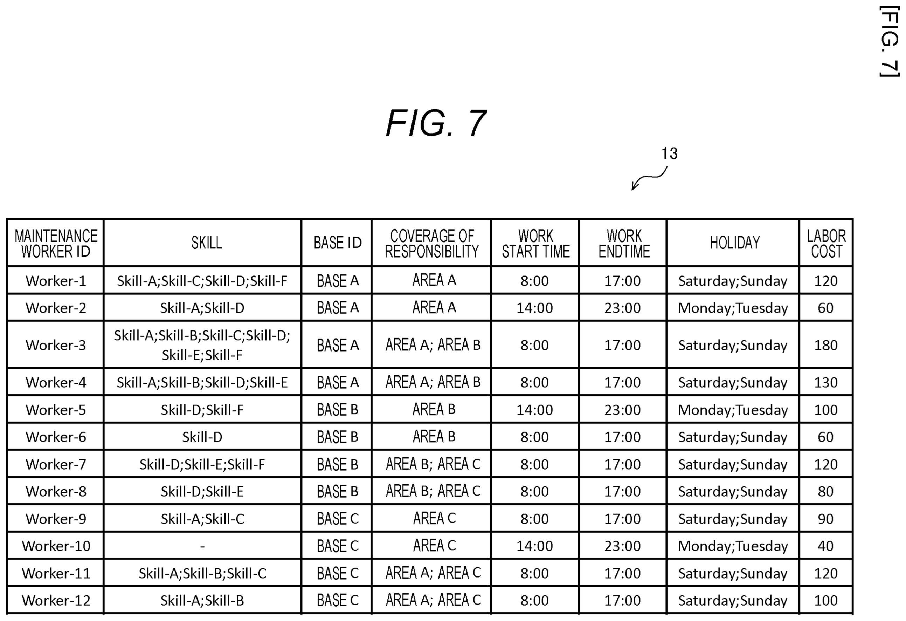

FIG. 7 is a table illustrating an example of the maintenance organization information 13. The maintenance organization information 13 holds the following information for each individual maintenance worker identified by the maintenance worker ID.
Skill Possessed by Maintenance Worker
· Information on Organization to Which Maintenance Worker Belongs (Base ID in which maintenance worker is present)
· Information on Specific Work of Maintenance Worker (Coverage of responsibility, work start time, work end time, predetermined holiday, and labor cost)

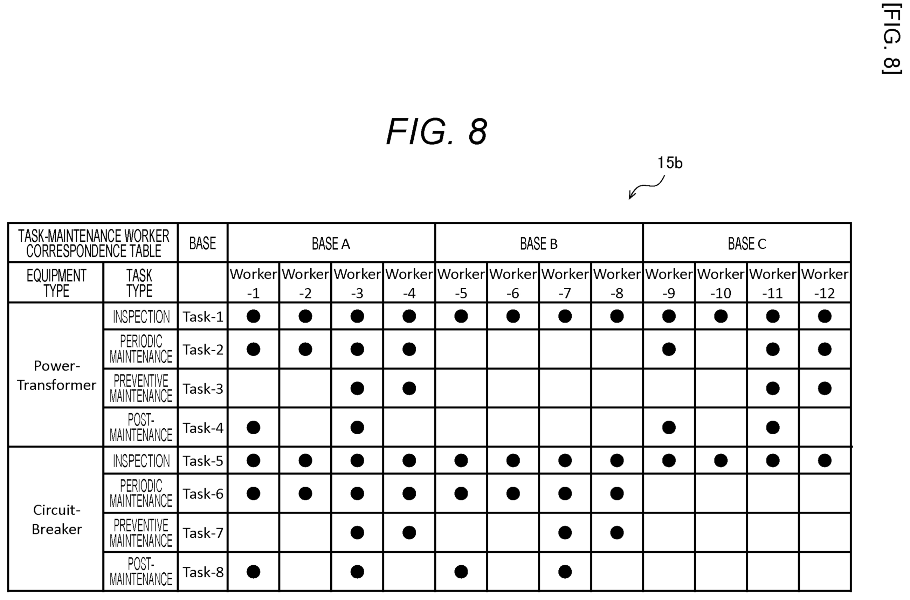

FIG. 8 is a table illustrating an example of task assignment information 15b. The task assignment information 15b indicates a correspondence relationship between maintenance tasks on the vertical axis and maintenance workers on the horizontal axis.

For example, a circle is marked in a cell where Task-1 and Worker-1 intersect, which indicates that Worker-1 is available to handle Task-1. Note that, in a case where there are few maintenance workers who are available to handle a certain task, there is a high risk that the task cannot be executed in a timely manner due to a lack of personnel.

Referring to the maintenance task information 12 illustrated in FIG. 6 and the maintenance organization information 13 illustrated in FIG. 7, the input unit 14 (manual input) or the work amount calculation unit 15 (automatic calculation) creates the task assignment information 15b including availability information indicated by circles in FIG. 8 in consideration of multiple factors such as the skills of the maintenance workers, bases where the maintenance workers are present, and the coverages of responsibility of the maintenance workers.

The task assignment information 15b may be input by the user each time, but may be input in linkage with information held by other systems exemplified below.
· Enterprise asset management system (EAM: Enterprise Asset Management)
· Asset performance management system (APM: Asset Performance Management)
· Condition monitoring system (CMS: Condition Monitoring System)

When the organization design support device 100 is linked with other systems, it is possible to save the time and effort required for the user to input information, and it is also possible to manage assets while updating the latest information on facilities each time. In addition, the task assignment information 15b may be stored as a database inside the organization design support device 100.

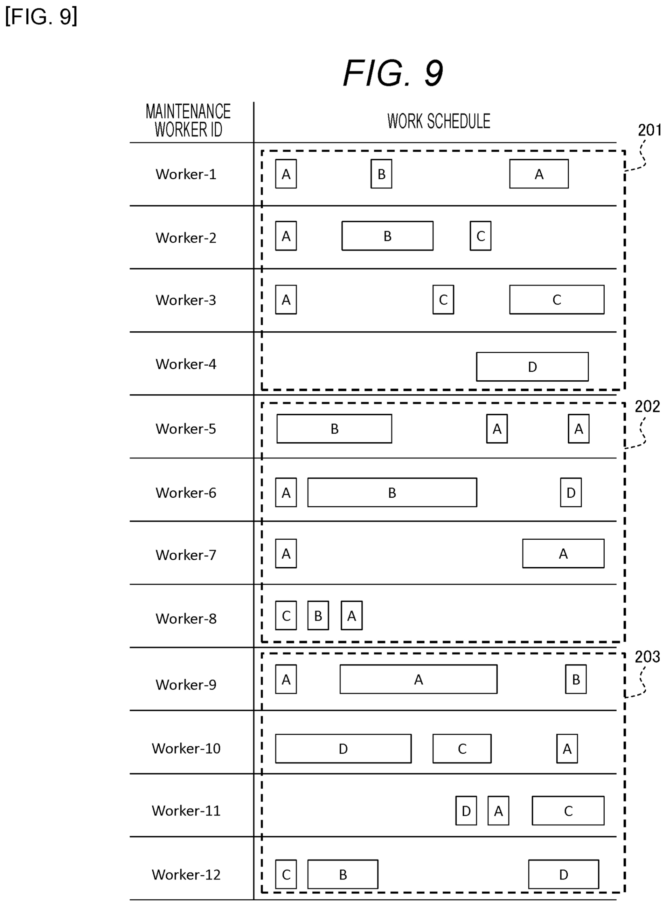

FIG. 9 is a Gantt chart illustrating a calculation result of the work amount calculation unit 15. In this Gantt chart, the vertical direction is divided by maintenance worker IDs (maintenance workers), and the horizontal direction represents work schedules with time progressing toward right. A task type, A: inspection, B: periodic maintenance, C: preventive maintenance, or D: post-maintenance, is described as each element in the Gantt chart.

For example, a work schedule for maintenance worker Worker-1 is arranged so as to sequentially perform short-term A: inspection → break → B: periodic maintenance → break → medium-term A: inspection. On the other hand, a work schedule for maintenance worker Worker-2 is arranged so as to sequentially perform short-term A: inspection → break → long-term B: periodic maintenance → break → short-term C: preventive maintenance.

The work amount calculation unit 15 calculates a maintenance work amount to be generated based on the task assignment information 15b and the various types of information received by the input unit 14.

The work amount can be calculated, for example, by a maintenance work simulation using an agent simulation. In the agent simulation, each character in the real world is represented by a model called an agent.

For example, in the agent simulation of maintenance work, asset data corresponding to the simulation world is generated for each management unit, such as a real-world asset or an asset part, and the assets in the simulation world autonomously operate/fail to reproduce the behaviors of the assets in the real world. The data generated at this time is referred to as an agent, and the asset data is referred to as an asset agent.

The asset agent can be created using the facility information 11. Similarly, an agent for each maintenance worker is also generated in the simulation world, and is referred to as a maintenance worker agent. The maintenance worker agent can be created using the maintenance organization information 13. The maintenance worker agent executes the maintenance task defined in the maintenance task information 12. In addition to the maintenance task, the behaviors of the maintenance worker during actual maintenance work, such as waiting, moving, and resting, are reproduced. As a result, when a task such as periodic maintenance or failure handling occurs with respect to an asset agent, the work amount calculation unit 15 extracts an available maintenance worker agent based on the task assignment information 15b and assigns the extracted maintenance worker agent to the task.

In this way, by simulating the behaviors such as the operation of the asset and the occurrence of the failure and the behavior of the maintenance worker for the execution of the maintenance task on the computer and recording the time when each event occurs, a maintenance work amount (work time) can be calculated for each maintenance worker as illustrated in FIG. 9.

The classification unit 16 classifies the work amounts calculated by the work amount calculation unit 15 according to any one of the fields included in the facility information 11, the maintenance task information 12, and the maintenance organization information 13.

In the example of FIG. 9, the maintenance organization classification unit 16b of the classification unit 16 classifies the work amounts (work times) into the three organizations defined in the maintenance organization information 13. Hereinafter, in the present specification, an example in which an organization is formed for each area will be described. That is, one organization is designed in one area.
· Work amounts 201 in area A
· Work amounts 202 in area B
· Work amounts 203 in area C

Furthermore, the task type classification unit 16a of the classification unit 16 may classify the work amount 201 for area A into the task types defined in the maintenance task information 12.
· Work amounts for A: inspection among work amounts 201 in area A.
· Work amounts for B: periodic maintenance among work amounts 201 in area A.
· Work amounts for C: preventive maintenance among work amounts 201 in area A.
· Work amounts for D: post-maintenance among work amounts 201 in area A.

Similarly to the above, the work amounts 202 in area B and the work amounts 203 in area C can also be sub-classified by task type.

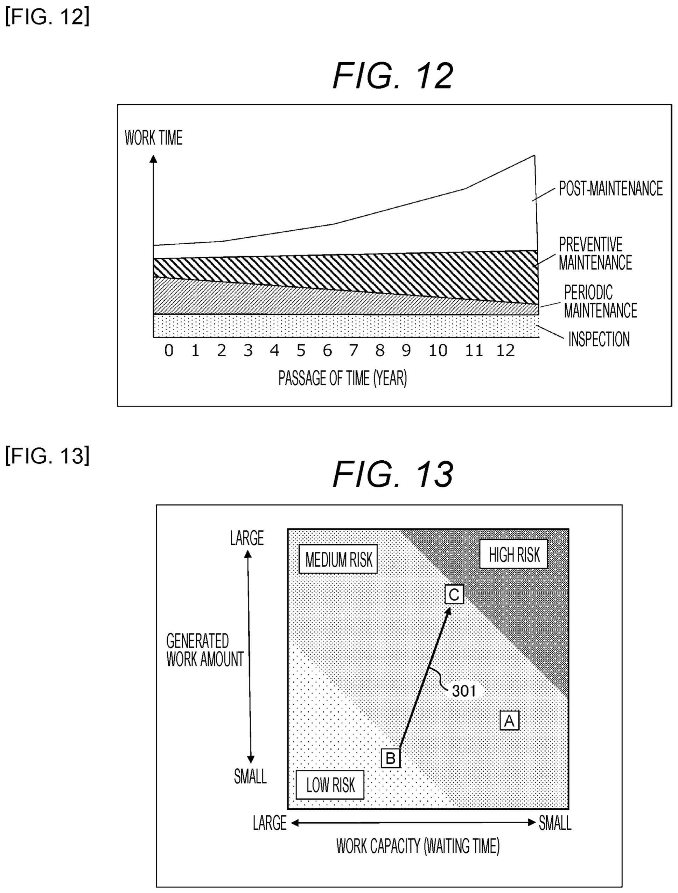

The evaluation unit 17 evaluates the work amount by aggregating the work amounts for each classification result of the classification unit 16. The result of the evaluation performed by the evaluation unit 17 is displayed on the display unit 18, and presented to the user via a display or the like. In addition, the evaluation unit 17 may perform the following evaluation in order to display the result of aggregating the work amounts in an easy-to-understand manner.
(Evaluation 1) Simply comparing work amounts by classification (FIG. 10).
(Evaluation 2) Setting a target value for a work amount in advance, and calculating and detecting a deviation from the target value (FIG. 11).
(Evaluation 3) Ranking the work amount according to the magnitude of the work amount (displayed by rank in three regions: low risk, medium risk, and high risk in FIG. 13).

As described above, the work amount calculation unit 15 calculates, as simulation results, when who has executed what type of work task for how long time for which asset. In these simulation results, facility information (which asset), maintenance task information (what type of task), and maintenance organization information (who) are added as tag information for each work time (work amount).

The classification unit 16 classifies each work time according to each of the fields (e.g., area, task type, base, etc.) included in the various types of information.

The evaluation unit 17 aggregates (sums, averages, and the like) the work times for each classification result of the classification unit 16, and outputs the aggregation results on a screen from the display unit 18 as evaluation values that can be compared for each classification.

Hereinafter, examples in which results of evaluations performed by the evaluation unit 17 are displayed according to the first embodiment will be described with reference to FIGS. 10 to 13.

FIG. 10 is a screen display diagram of a result of the task type classification unit 16a classifying work times by task type, sorting work times by area, and comparing work times using bar graphs. In this screen display diagram, the work time corresponds to the downtime (power outage time during inspection). By performing such an evaluation, the administrator can compare the work amount balances by area and optimize the task design.

For example, the ratio of post-maintenance in area B is larger than those in the other areas, and the administrator can consider whether the downtime can be reduced by switching from post-maintenance to preventive maintenance. In addition, the administrator can compare work balances between the areas and optimize task/resource allocation. For example, the work amount for area C is larger than that for area B, and the administrator can consider whether the work time for area C can be shortened by switching the arrangement of some of the personnel in charge in area B to area C.

FIG. 11 is a screen display diagram of a result of the maintenance organization classification unit 16b comparing work times by maintenance worker and by base using bar graphs.

When displaying a work amount that is an aggregation result of the classification unit 16, the display unit 18 also displays a preset target value for the work amount.

By performing such an evaluation, the administrator can compare the work amount balances by maintenance worker, and can optimize the arrangement of maintenance workers and the coverage of responsibility. For example, the work amount of Worker-9 is small and the work amounts of the other workers are relatively large in base C, the administrator can consider whether the work amounts can be leveled out by reviewing the coverages of responsibility.

FIG. 12 is a screen display diagram of a result of the task type classification unit 16a displaying work amounts by task type using future time-series graphs. In this screen display diagram, a hypothetical scenario is input in which the task method is switched from periodic maintenance to preventive maintenance.

By performing such an evaluation, the administrator can predict a potential future risk in advance and consider a change in design of maintenance work in advance. For example, the administrator predicts that, due to the progression of facility aging, the need for post-maintenance to handle failures will rapidly increase after several years. Therefore, the administrator can consider future task design such as whether failures can be prevented in advance by introducing preventive maintenance more times than currently assumed.

FIG. 13 is a screen display diagram of a result of the maintenance organization classification unit 16b plotting generated work amounts on the vertical axis and work capacities on the horizontal axis by base. In this manner, the display unit 18 displays, on a screen, the result plotted by the maintenance organization classification unit 16b on a matrix having two axes. As a result, the administrator can visually grasp the status of each base and consider the organization design.

The work capacity is an index indicating how quickly an unexpected failure or the like, which needs to be emergently handled, can be emergently handled, and here, the waiting time of the maintenance worker in the base is used for the work capacity. If the waiting time in the base can be secured to some extent, a sudden event can be quickly handled. On the other hand, if the waiting time is too long, it can be said that the maintenance workers have too much free time, and the maintenance worker resources cannot be effectively utilized.

The display unit 18 plots and displays the work amount, which is an aggregation result of an aggregation unit (the classification unit 16 and the evaluation unit 17), on a matrix having a plurality of axes. For example, the display unit 18 plots a work amount, which is an aggregation result of the classification unit 16, on a matrix having an index of work capacity that can be provided by the organization of the maintenance organization information 13 and an index of work amount generated according to the work content of the maintenance task information 12 as its axes, and displays the plotted work amount in the screen display diagram of FIG. 13.

In this screen display diagram, the risk of the organization design is evaluated by a matrix (a combination of the vertical axis and the horizontal axis), with the lower left region representing low risk, the center region representing medium risk, and the upper right region representing high risk. That is, in the matrix, risk levels are set in three stages in advance according to the values of the generated work amount and the work capacity. The risk level is expressed by a color tone, with a darker color area indicating a higher-risk zone with a larger generated work amount and a smaller work capacity.

Furthermore, when displaying a work amount that is an aggregation result of the classification unit 16, the display unit 18 displays the work amount as information ranked according to the magnitude of the work amount.

According to FIG. 13, it is important to design an organization so that the waiting time falls within an appropriate range. By referring to the screen display of FIG. 13, the administrator can compare the balances between work amount and work capacity by base and optimize the arrangement of personnel. For example, the base C is in a high risk state, and the administrator can consider movement of personnel from base B having a larger work capacity to base C.

Furthermore, the evaluation unit 17 may determine whether to encourage movement of personnel between the bases based on the work amount and work capacity for each base. For example, the evaluation unit 17 may calculate a ratio obtained by dividing the work amount by the work capacity for each base, and when the calculated ratio for a certain base, base C, exceeds a predetermined threshold (that is, when the work amount is larger than the work capacity for the base C), determine to encourage movement of personnel from another base, base B, to base C. In addition, the evaluation unit 17 may support the administrator by displaying information encouraging the movement of personnel from base B to base C as an arrow display 301 on the screen.

That is, when displaying a work amount that is an aggregation result of the classification unit 16, the display unit 18 also displays proposal information (arrow display 301) for smoothing the work amount for each organization.

The organization design support device 100 according to the first embodiment described above provides a maintenance design method that supports diversification of assets and realizes efficient management and maintenance that maintains a high availability rate. In particular, the maintenance task and maintenance organization structure are appropriately designed in a well-balanced manner according to the facility status, which is an important point in maintenance design.

As a result, the administrator can quantitatively grasp the balance and the influence of the work amount by maintenance task by maintenance organization, making it possible to flexibly and appropriately design maintenance tasks and organizations according to the facility status. As a result, the administrator can flexibly change the organization structure, following the asset transition and the progress of the Internet of Things (IoT) technology. By such a change (optimization) of the organization structure, it is possible to avoid business risks such as long-term facility shutdowns, improve resilience, and improve the work-life balance of maintenance workers.

In addition, the organization design support device 100 according to the first embodiment is capable of enabling the administrator to notice the following unbalanced organization designs by displaying the screens of FIGS. 10 to 13.
· With respect to personnel present in a certain base, the amount of maintenance work generated for facilities within an area that the base is responsible for is excessively large, and maintenance workers are always busy with tasks and overtime work is becoming normal. In addition, when a sudden event such as a failure occurs, there is no personnel capable of quickly handling the sudden event, which causes a long-term operation shutdown.
· With respect to personnel present in a certain base, the amount of maintenance work generated for facilities within an area that the base is responsible for is excessively small, and maintenance workers are left idle while waiting for tasks in the base. In this case, the maintenance company pays unnecessary labor costs, which is not efficient.

As a result, the screen display of the organization design support device 100 enables the administrator to adopt an improved organization design as follows.
· An organization design in which, with respect to personnel present in a certain base, the amount of maintenance work generated for facilities within an area that the base is responsible for is just right, and work is performed with an appropriate work load.
· An organization design in which there is little overtime work, there is little waiting time for tasks in the bases, and there is also an appropriate margin for quickly handling a sudden event such as a failure.

### [Second Embodiment]

Hereinafter, the second embodiment will be described. In the first embodiment, the organization design support device 100 has been described as handling one organization design pattern, but in the second embodiment, the organization design support device 100 is extended to handle a plurality of organization design patterns (hypotheses).

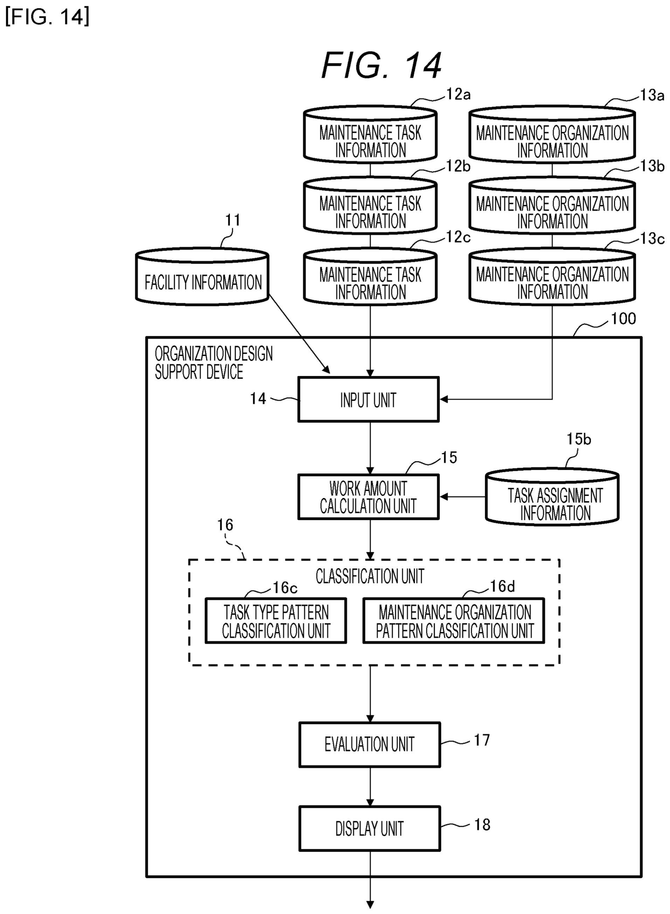

FIG. 14 is a configuration diagram of an organization design support device 100 according to the second embodiment. In FIG. 14 and FIG. 1, the same reference signs denote the same parts, and thus the description thereof will not be repeated and only the differences will be described.

When compared to the organization design support device 100 of FIG. 1, the organization design support device 100 of FIG. 14 prepares a plurality of patterns of various types of input information (maintenance task information 12 and maintenance organization information 13), which are received by the input unit 14. Then, the classification unit 16 is extended to handle the plurality of patterns.

The task design pattern classification unit 16c (FIG. 14) that handles a plurality of patterns is an extension of the task type classification unit 16a (FIG. 1) that handles one pattern (a design pattern for each task type of the maintenance task information 12). For example, based on three patterns of maintenance task information 12a, 12b, and 12c having different execution triggers (occasions) for maintenance tasks, the task design pattern classification unit 16c classifies work amounts calculated by the work amount calculation unit 15 by pattern (for each of the three execution triggers). As the execution triggers, indexes such as a time elapsed since the previous task was executed, a health index, and an importance level can be used. When a time elapsed since the previous task was executed is designated as the execution trigger, so-called time-based maintenance (TBM) is performed. When an index such as a health index or an importance level is designated as the execution trigger, so-called condition-based maintenance (CBM) is performed.

In this way, designing tasks with the type of execution trigger being changed for each task corresponds to changing the strategy (maintenance policy) of the maintenance task execution such as TBM or CBM.

Therefore, the input unit 14 receives a plurality of pieces of maintenance task information 12 having different work execution triggers as various types of input information of a plurality of patterns. The work amount calculation unit 15 calculates a work amount for each work content by pattern. The classification unit 16 and the evaluation unit 17 aggregate the work amounts calculated by the work amount calculation unit 15 by pattern.

In addition, the organization design pattern classification unit 16d (FIG. 14) that handles a plurality of patterns is an extension of the maintenance organization classification unit 16b (FIG. 1) that handles one pattern (a design pattern for each organization of the maintenance organization information 13). For example, based on three patterns of maintenance organization information 13a, 13b, and 13c having different organization structures (maintenance worker arrangements), the organization design pattern classification unit 16d classifies work amounts calculated by the work amount calculation unit 15 by pattern (for each of three maintenance worker arrangements). The maintenance worker arrangement corresponds to, for example, determining a base or team to which each maintenance worker belongs.

Therefore, the input unit 14 receives a plurality of pieces of maintenance organization information 13 having different organization structures as various types of input information of a plurality of patterns. The work amount calculation unit 15 calculates a work amount for each work content by pattern. The classification unit 16 and the evaluation unit 17 aggregate the work amounts calculated by the work amount calculation unit 15 by pattern.

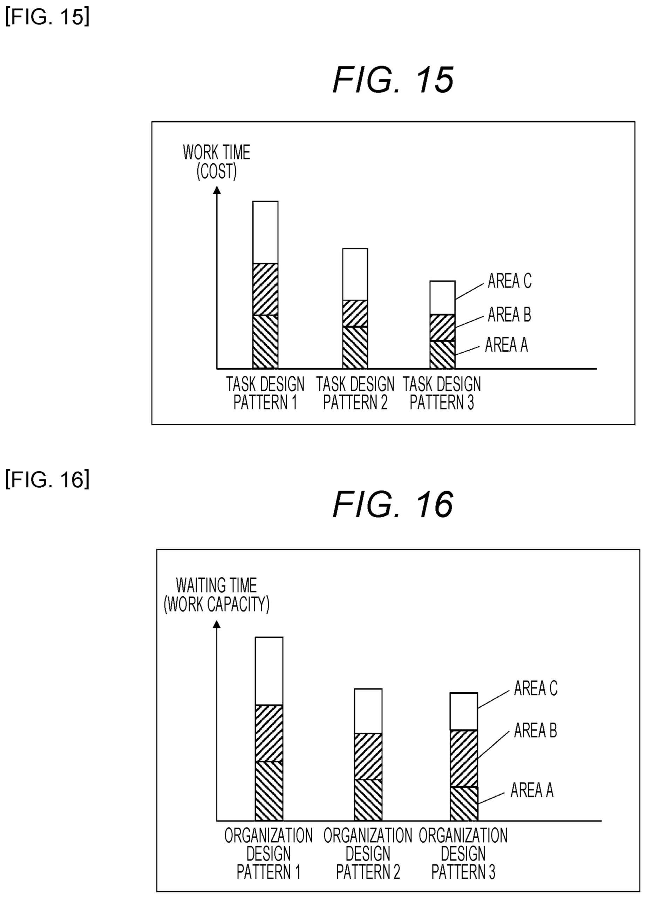

Hereinafter, examples in which results of evaluations performed by the evaluation unit 17 are displayed according to the second embodiment will be described with reference to FIGS. 15 and 16.

FIG. 15 is a screen display diagram of a result of the task design pattern classification unit 16c comparing work times by area for each of the task design patterns having different execution triggers using bar graphs. The work time is proportional to the work cost.

By performing such an evaluation, the administrator can find a task design pattern that minimizes the work cost among the plurality of task design patterns, thereby improving and optimizing the maintenance policy. For example, in FIG. 15, the administrator can determine that task design pattern "3", in which the work times for the respective areas are relatively uniform and the work cost is also low, is promising.

FIG. 16 is a screen display diagram of a result of the organization design pattern classification unit 16d comparing the waiting times (work capacities) by area for each of the organization design patterns having different organization structures using bar graphs.

By performing such an evaluation, the administrator can select an organization design pattern that has sufficient flexibility with an appropriate work capacity from the plurality of organization design patterns, thereby improving and optimizing the maintenance organization design. For example, in FIG. 16, the administrator can determine that organization design pattern "2", which has an appropriate work capacity and a good balance of capacity between the areas, is promising.

The organization design support device 100 according to the second embodiment described above is capable of enabling the administrator to quantitatively compare a plurality of maintenance task design patterns, thereby improving and optimizing the maintenance task design (maintenance policy). In addition, the organization design support device 100 according to the second embodiment is capable of enabling the administrator to quantitatively compare a plurality of maintenance organization design patterns, thereby improving and optimizing the maintenance organization design.

Furthermore, the present invention is not limited to the above-described embodiments, and it goes without saying that various other applications and modifications can be taken without departing from the gist of the present invention set forth in the claims. For example, each of the above-described embodiments explains the configuration of the organization design support device 100 concretely and specifically in order to explain the present invention in an easy-to-understand manner, and is not necessarily limited to including all the components described above. In addition, a part of a configuration of one embodiment can be replaced with a component of another embodiment. In addition, a component of one embodiment can be added to a configuration of another embodiment. In addition, with respect to a part of a configuration of each embodiment, it is also possible to perform addition of another component, replacement with another component, or deletion.

In addition, some or all of the above-described configurations, functions, processing units, and the like may be realized by hardware, for example, by designing an integrated circuit. A processor device in a broad sense such as a field programmable gate array (FPGA) or an application specific integrated circuit (ASIC) may be used as the hardware.

Furthermore, the components of the organization design support device 100 according to the above-described embodiment may be implemented in any pieces of hardware as long as the pieces of hardware can transmit and receive information to and from each other via a network. Furthermore, the processing executed by a certain processing unit may be realized by one piece of hardware or may be realized in a distributed manner by a plurality of pieces of hardware.

### Reference Signs List

- 11: facility information
- 12: maintenance task information (task information)
- 13: maintenance organization information (organization information)
- 14: input unit
- 15: work amount calculation unit
- 15b: task assignment information
- 16: classification unit (aggregation unit)
- 17: evaluation unit (aggregation unit)
- 18: display unit
- 16a: task type classification unit
- 16b: maintenance organization classification unit
- 16c: task design pattern classification unit
- 16d: organization design pattern classification unit
- 100: organization design support device

## Claims

1. An organization design support device comprising:
an input unit that receives, as various types of input information, facility information indicating a facility that is a target of work, task information indicating a work content for the facility, and organization information indicating an organization to which a person executing the work content belongs;
a work amount calculation unit that calculates a work amount for each work content based on the various types of input information received by the input unit;
an aggregation unit that aggregates the work amounts calculated by the work amount calculation unit for each organization of the organization information; and
a display unit that displays a work amount that is a result of the aggregation performed by the aggregation unit.

2. The organization design support device according to claim 1, wherein the aggregation unit further aggregates the work amounts aggregated for each organization for each task type of the work content.

3. The organization design support device according to claim 1, wherein the display unit plots and displays the work amount that is the result of the aggregation performed by the aggregation unit on a matrix having a plurality of axes.

4. The organization design support device according to claim 3, wherein the display unit plots and displays the work amount that is the result of the aggregation performed by the aggregation unit on the matrix having an index of work capacity that is providable by the organization of the organization information and an index of work amount generated according to the work content of the task information as the axes.

5. The organization design support device according to claim 1, wherein
the input unit receives a plurality of pieces of the task information having different work execution triggers as the various types of input information of a plurality of patterns,
the work amount calculation unit calculates a work amount for each work content by pattern, and
the aggregation unit aggregates the work amounts calculated by the work amount calculation unit by pattern.

6. The organization design support device according to claim 1, wherein
the input unit receives a plurality of pieces of the organization information having different organization structures as the various types of input information of a plurality of patterns,
the work amount calculation unit calculates a work amount for each work content by pattern, and
the aggregation unit aggregates the work amounts calculated by the work amount calculation unit by pattern.

7. The organization design support device according to claim 1, wherein the facility information to be received by the input unit includes information on which facility belongs to which area as information on areas where a power outage occurs simultaneously during inspection work on the facility that is the target of work.

8. The organization design support device according to claim 1, wherein the display unit displays the work amount that is the result of the aggregation performed by the aggregation unit together with a preset target value for the work amount.

9. The organization design support device according to claim 1, wherein the display unit displays the work amount that is the result of the aggregation performed by the aggregation unit as information ranked according to a magnitude of the work amount.

10. The organization design support device according to claim 1, wherein the display unit displays proposal information for smoothing the work amount for each organization when displaying the work amount that is the result of the aggregation performed by the aggregation unit.

11. An organization design support method performed by an organization design support device including an input unit, a work amount calculation unit, an aggregation unit, and a display unit,
wherein the input unit receives, as various types of input information, facility information indicating a facility that is a target of work, task information indicating a work content for the facility, and organization information indicating an organization to which a person executing the work content belongs,
the work amount calculation unit calculates a work amount for each work content based on the various types of input information received by the input unit,
the aggregation unit aggregates the work amounts calculated by the work amount calculation unit for each organization of the organization information, and
the display unit displays a work amount that is a result of the aggregation performed by the aggregation unit.

12. An organization design support program for causing a computer to function as the organization design support device according to any one of claims 1 to 10.
